# EUROPEAN PATENT APPLICATION

(11) **EP 4 550 286 A1**
(43) Date of publication of application: **07.05.2025**
(21) Application number: 24210321.6
(22) Date of filing: 31.10.2024
(51) Int. Cl.: G07F 11/44, A47F 1/02, A47F 1/08, G07F 13/02, G07F 13/04

(54) **GRAVITY FEED DISPENSER FIXTURE AND REFILL ASSIST**

(30) Priority: 03.11.2023 US 202363596028 P; 29.10.2024 US 202418930436
(71) Applicant: Trade Fixtures, LLC, Little Rock, AR 72204 (US)
(72) Inventor: Pavlich, Craig, Little Rock, AR, 72204 (US)
(74) Representative: Banse & Steglich Patentanwälte PartmbB

(57) **Abstract**

A gravity-feed dispensing system includes a dispenser (100) having a hopper (102) and a valve (104). The hopper is configured to hold a bulk material. The valve is configured to selectively connect to the hopper. The valve is operable between open and closed conditions to selectively permit bulk material to pass from the hopper through the valve. A fixture (300) includes a shelf (79) configured to support the dispenser (100). A rail (308) is at the front of the shelf. The dispenser is configured for pivotable engagement with the rail. A latch (310) is configured to releasably retain the dispenser in an operative position on the shelf.

## Description

### CROSS-REFERENCE TO RELATED APPLICATION

The present application claims priority of US Provisional Patent Application No. 63/596,028, filed on November 3, 2023, the contents of which are incorporated by reference herein in its entirety.

### BACKGROUND

The present disclosure relates to the field of bulk dispensing bins, particularly those for use by consumers at point-of-sale installations. More specifically, the present disclosure relates to features for a fixture for bulk dispensers.

Bulk dispensers, and more particularly gravity-feed bulk dispensers are known and used in commercial settings for self-service portioning of bulk materials, for example, foods. Traditionally, gravity feed bins for dispensing bulk materials are used to dispense a wide variety of materials having a range of sizes and aggregate make-ups as diverse as hardware components (e.g. nuts and bolts) or food (e.g. nuts, cereals, grains, pastas, coffee (beans or ground), dried soup mix, candies, spices). Generally, the bins include an enclosure having an inlet at an upper end through which the enclosure is filled and a dispenser having an outlet at a lower end for dispense of the material and having a flow control device located between the enclosure and the outlet for controlling the amount of materials being dispensed. In operation, as the material is being dispensed gravity pulls the remaining material in the enclosure towards the lower end to replace dispensed material. These types of bins generally include a downwardly curving inner wall that forms a chute to channel the dispensed materials in a receptacle adjacent the outlet. Typically, gravity feed bins use an integrated enclosure and dispenser. The enclosure is filled, and subsequently refilled, with the bulk material and the dispenser operated to dispense the bulk material. Periodically, the entire apparatus is taken out of operation for service and/or cleaning and may include subsequent use of the apparatus to dispense a different kind of bulk material.

Examples of known gravity feed bins are found in US Pat. No. 4,903,866 entitled, "Gravity Dispensing Bin System"; US Pat. No. 5,437,393, entitled, "Apparatus for Delivering Bulk Foods"; US Pat. No. 6,182,864 entitled, "Bulk Food Dispensing Apparatus"; US Pat. No. 6,241,123 entitled, "Bulk Food Dispensing Apparatus"; US Pat. No. 7,178,697 entitled, "Agitator Assisted Bulk Product Dispenser"; US Pat. No. 10,450,152 entitled, "Expandable Gravity-Feed Bin"; and US Pat. App. Pub. No. 2019/0092617 entitled, "Expandable Gravity-Feed Bin." Each of these are incorporated by reference in their entireties.

Solutions exist to automate or partially automate portions of the operation and interaction with a gravity feed bin. Applicant's pending U.S. Patent Application No. 17/694,001 entitled "Bulk Food Dispenser Automation"; PCT International Application No. PCT/US22/31306 entitled "Bulk Dispenser Actuation Detection"; and PCT International Application No. PCT/US22/31308 entitled "System and Method of Labeling and Weighing Goods" all disclose systems and features relevant to the dispensing of bulk goods and are each incorporated by reference herein in their entireties.

### BRIEF DISCLOSURE

An example of a gravity-feed dispensing system includes a dispenser having a hopper and a valve. The hopper is configured to hold a bulk material for dispense. The valve is configured to selectively connect to the hopper. The valve includes an actuator assembly operable between open and closed conditions to selectively permit bulk material to pass from the hopper through the valve. A fixture includes a shelf configured to support the dispenser. A rail is at the front of the shelf. The dispenser is configured for pivotable engagement with the rail. A latch is configured to releasably retain the dispenser in an operative position on the shelf.

In other examples, the valve includes a clip configured for releasable engagement about the rail of the fixture and the dispenser is configured to pivot on the clip about the rail between the operative position and a loading position. A guide track on the shelf is configured to receive a handle of the hopper therein when the dispenser is in the operative position. The dispenser is configured to pivot relative to the shelf between open and closed positions and is biased in the closed position. The latch includes a projection configured to extend across the handle when the latch is in the closed position. The projection is vertically spaced from the handle by a predetermined distance when the latch is in the closed position. The predetermined distance provides for a predetermined range of rotation of the dispenser about the rail while the latch is in the closed position. The latch includes a release lever extending below the shelf from the projection of the latch. A force on the release lever overcomes the bias to move the projection from the closed position to the open position. The fixture may include an actuation detector. The actuation detector may include a Hall effect sensor. The valve may include at least one ferromagnetic detection element configured to move past the Hall effect sensor upon actuation of the valve.

In still further examples of the gravity-feed dispensing system, the fixture includes at least a first shelf support bar and a second shelf support bar. The shelf is supported from the first and second shelf support bars. The first shelf support bar is cylindrical. The shelf includes a tube configured to receive the first shelf support bar for sliding and pivoting engagement between the shelf and the first shelf support bar. The shelf may include a screw configured for engagement with the second shelf support bar, and the screw is threadingly adjustable to adjust an angle of the shelf about the first shelf support bar. A load cell may be disposed between the shelf and the second support bar. The load cell is configured to measure a weight representative of a combined weight of the shelf and the dispenser. At least one bearing may be positioned between the shelf and the first support bar to facilitate rotation of the shelf about the first support bar. The hopper includes a hopper identifier. The hopper identifier encodes an identification of the bulk material in the hopper. The shelf includes an ID reader configured to read the hopper identifier when the hopper is in proximity to the ID reader in the operative position. The ID reader may be an RFID reader and the hopper identifier is an RFID tag.

A fixture for a gravity-feed dispensing system includes a shelf. The shelf includes a mounting bar, a plurality of bays, a rail, and a latch. The plurality of bays are defined across the mounting bar. Each bay of the plurality of bays includes a guide track configured to receive a handle of a dispenser. A rail is positioned at a front edge of the mounting bar relative to each bay of the plurality of bays. A latch is configured to pivot relative to the shelf between open and closed positions. The latch is biased in the closed position. The latch includes a projection configured to extend across the guide track when in the closed position.

In examples of the fixture, a first bracket includes a first support bar and a second support bar. A second bracket includes a third support bar and a fourth support bar. The shelf is configured to engage the second and fourth support bars and the shelf is configured to pivotably engage the first support bar and the third support bar. The first support bar and the third support bar are cylindrical and the shelf includes at least one tube the at least one tube configured to pivotably receive the first support bar and the third support bar such that the shelf is pivotable about the first support bar and the third support bar. The shelf further includes at least one screw configured to engage at least the second support bar or the fourth support bar. The at least one screw is operable to define an angle of the shelf about the first support bar and the third support bar.

In further examples of the fixture, at least one load cell disposed between the shelf and at least one of the second support bar and the fourth support bar. The load cell is configured to continuously monitor a weight of the entire contents of the shelf. An actuation detector includes a Hall effect sensor. The actuation detector is connected to the shelf at a position configured to sense a detectable element of a dispenser releasably connected to the shelf. A controller is configured to receive a signal from the actuation detector and configured to detect a dispense from the received signal. An ID reader is positioned relative to the guide track and configured to read a hopper identifier located in a handle of a hopper. The hopper identifier encodes an identification of a bulk material in the hopper. A scale and a graphical display is in proximity to the scale. When a dispense is detected by the controller, the controller is configured to present the identification of the bulk material on the graphical display.

### BRIEF DESCRIPTION OF THE DRAWINGS

Figure 1 depicts an example of a gravity feed bulk dispenser.
Figure 2 is a system diagram of an example of bulk dispenser communication.
Figure 3 is a perspective view of an example of a fixture with a dispenser in an operative position.
Figure 4 is a side view of Fig. 3.
Figure 5 is a perspective view of an example of the fixture with the dispenser in a loading position.
Figure 6 is a side view of Fig. 5.
Figure 7 is a detailed view of the shelf depicting a bay and a shelving adapter.
Figure 8A depicts an example of a shelf system.
Figure 8B is a side view of an example of a dispenser on a shelf.
Figure 9 is a cross-sectional view of a detail as indicated with line 9-9 on Fig. 8B
Figure 10 is a perspective view of an example of the fixture within a system as schematically shown in Fig. 2.

### DETAILED DISCLOSURE

Gravity feed bulk dispensers are supported at the point of dispense to the retail customer. The gravity feed bulk dispensers must be arranged at positions for convenient customer interaction. Gravity feed dispensers are densely positioned to provide numerous stock-keeping units (SKU's) of product available to the customer. Electronics enabled dispensing may improve customer feedback, inventory management, and efficient checkout. Fixture solutions are disclosed herein to which gravity feed bulk dispensers may be secured to provide these features. Fixture solutions disclosed herein may further facilitate refill and/or replacement of the gravity feed bulk dispensers.

While it will be recognized that the bulk material may be any of a variety of forms of materials, the examples provided herein will be that of foodstuffs or other consumables. Examples of gravity feed bulk dispensers may include either detachable hoppers or integrated enclosures. Gravity feed bulk dispensing systems with integrated enclosures and dispensers may use one or more components common to the construction of the enclosure and the dispenser. A gravity feed bulk dispensing system with separable dispenser and hopper use construction and design enabling such structures to be separable and interchangeable between individual dispensers and hoppers.

As used herein detachable hoppers are bulk goods containers that removably connect to a dispenser, the hopper holds the bulk material to be dispensed. Detachable hoppers may facilitate supply chain operations through the use of single-use constructions that are shipped to the retail location in a filled state and disposed of or recycled upon use. Detachable hoppers may further facilitate supply chain operations through the use of refillable constructions that are either refilled in place, like a current integrated enclosure, but are removable for separate cleaning and maintenance from the dispenser, or are returnable to a supplier of the bulk goods for cleaning, service, and refilling. Examples of detachable hoppers may include information technologies for example serial numbers, bar codes, RFID, NFC which encode identifying information representing the detachable hopper, the goods contained within the hopper, or attributes of the goods contained within the hopper.

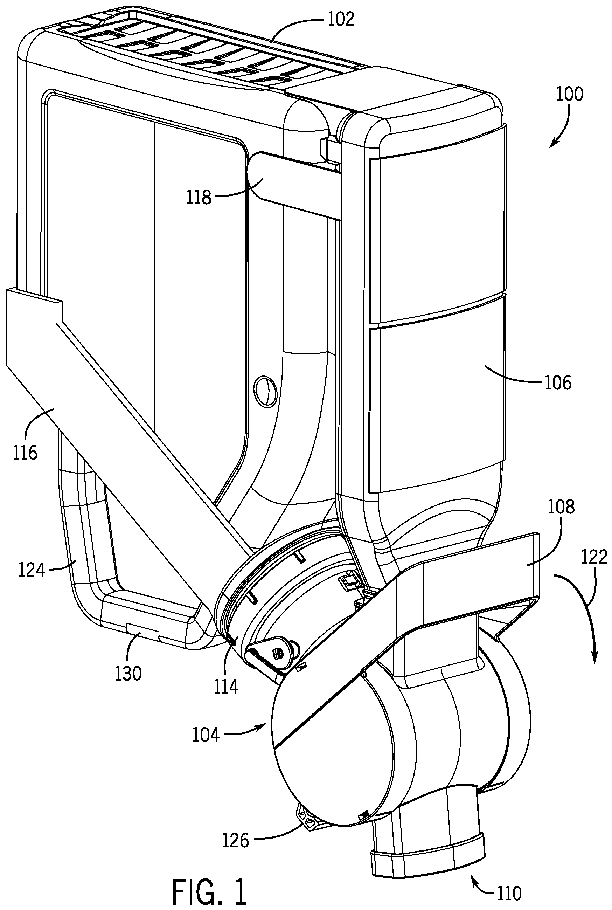

Figure 1 is a perspective view of an example of a gravity feed dispenser 100. The dispenser 100 includes a hopper 102 that is releasably connected to a valve assembly 104. A false front compartment 106 as described in further detail herein may exemplarily be operatively connected to the valve assembly 104. The valve assembly 104 includes a handle 108 and an outlet 110 exemplarily taking the form of a spout. The handle 108 receives a manual force input from a customer for example in the direction of arrow 122 to operate a valve internal to the valve assembly 104 to selectively permit bulk material to pass from the hopper 102 through the valve assembly 104 and out through the outlet 110. In an example, the valve is a rotary valve, although other forms of valves may be used, including, but not limited to reciprocating gate or screw valves.

The valve assembly 104 includes a barrel 114 which exemplarily includes threads, ribs, or other friction-fitting features which facilitate the connection of the valve assembly 104 to a mouth of the hopper 102. The valve assembly 104 may further include a cradle 116 that extends rearward from the barrel 114 and is configured to connect to and support the hopper 102. The cradle 116 and the barrel 114 may extend at an angle between 30-45 degrees although other angles or angle ranges may be used within the present disclosure. The angle of the cradle 116 may be with reference to a horizontal dimension when the gravity feed dispensing system is in a dispensing position. The horizontal dimension may be perpendicular to a vertical dimension, for example, represented by either the outlet 110 or the false front compartment 106. Relatedly, the opening of the barrel 114 may be perpendicular to the cradle 116, and therefore at an angle complimentary to that of the cradle 116 exemplarily at an angle between 45-60 degrees from the same reference horizontal. The cradle 116 may include resilient tabs 118 forming a detent connection, exemplarily with a button 120 or other projection to secure to the hopper 102. The false front compartment 106 may include similar resilient tabs 118 to further secure the components of the gravity feed dispenser 100 together.

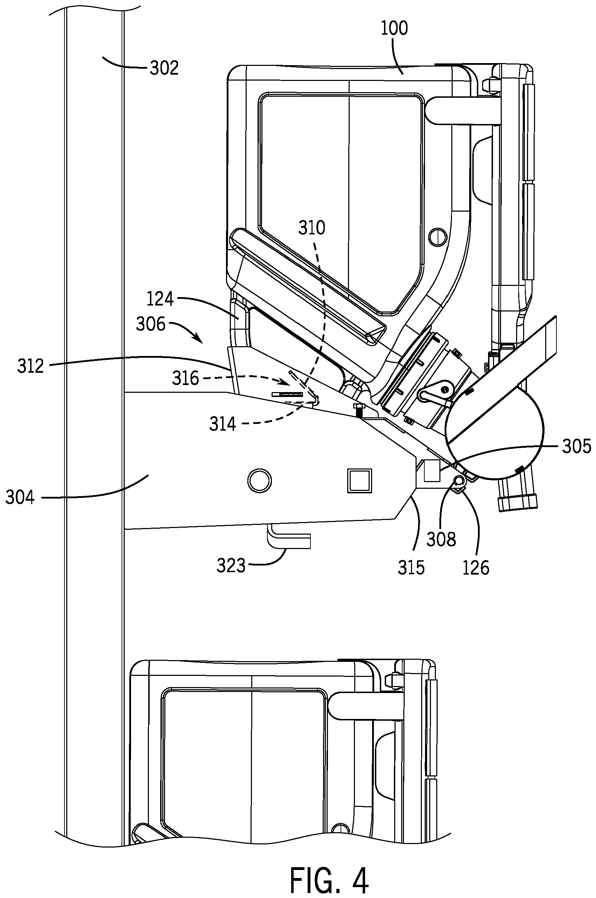

Examples of the hopper 102 further include a handle 124 as depicted in Fig. 1. However it will be recognized that not all hoppers 102 may include such handles. When the hopper includes a handle 124, the cradle 116 may include an aperture (not depicted) for accommodation of the handle 124 to extend through the plane of the cradle 116. In still further examples, the cradle 116 is an optional feature and the valve assembly 104 connects to the hopper 102 at the barrel 114 and further optionally at the tabs 118 of the false front 106. As will be described in further detail herein, the dispenser 100, includes a clip 126 built into the valve assembly 104 of the dispenser 100. The clip 126 may be of a resiliently deformable type in which one or more arms are separable to deform over a rail 308 (see e.g. Figs. 4, 6, 9) to pivotably secure the dispenser 100 to the fixture. In another example, the clip 126 may be a hook and dimensioned to similarly interact with the rail 308, but without deformation of the at least one arm. The clip 126 is exemplarily oriented in a direction such that the dispenser 100 is retained on the rail 308 when the dispenser is in the loading position as described in further detail herein.

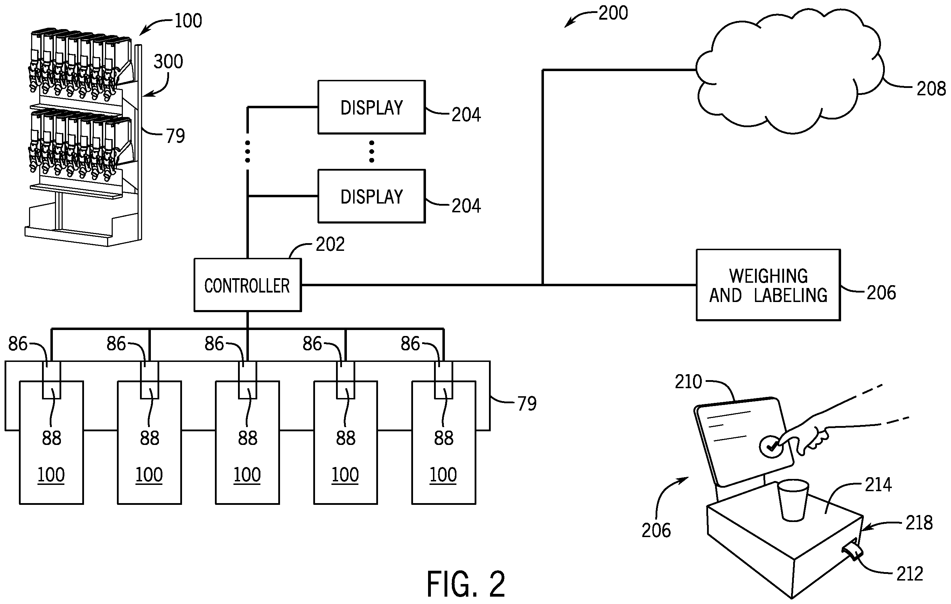

Fig. 2 is a system diagram that depicts an example of electronically-connected bulk dispensers 100. Since the bulk dispensers of the present disclosure are intended for food contact and may frequently removed for repair or replacement, the present disclosure provides for systems wherein the electronics and electronic communication features are provided mostly or entirely with components that are not integrated with the bulk dispensers. Rather, these components may be integrated with or otherwise connected to the fixture as will be described in further detail herein. Additional examples of electronic integration with bulk dispensing are disclosed in WO2022/251604 "Bulk Dispenser Actuation Detection" which is hereby incorporated by reference herein in its entirety.

Fig. 2 presents a system 200 of retail bulk material dispensing and sale. The system 200 includes a plurality of bulk dispensers 100 as described above. The shelf 79 may include one or more sensors 86 at a position relative to each of the dispensers 100 such that the one or more sensors 86 can detect information from an element 88 associated on/in/to the dispenser 100. Examples of such sensors and elements may include, but are not limited to, detection of valve operation, reading encoded information for example with RFID, or a load cell to produce a measurement of a weight or change in weight of the bulk dispenser 100.

In one example, sensors 86 detect a change in the open or closed condition of each of the dispensers 100. The dispenser 100 may include a detectable element 88 on or in a portion of the valve assembly 104. The sensors 86 are communicatively connected to a controller 202, which is exemplarily a single board computer (SBC) comprising a microprocessor and other electrical components and circuitry such as to configure the controller 202 to receive the signals from each of the sensors 86 and to process the signals to determine when each dispenser 100 enters an open condition and/or a closed condition. The sensors 86 may receive power through in-fixture wires, while in other examples, the sensors 86 may receive power from batteries or wirelessly. Similarly, the sensors 86 may be communicatively connected to the controller 202 with a wired or a wireless communicative connection. In still further examples, at least part of the sensor 86 may be secured to the fixture, while in other examples, at least part of the sensor 86 is secured to the dispenser itself.

As previously noted, in examples of the sensors, the sensors produce an output signal that changes when a detectable element 88 of the dispenser 100 moves, as a result of actuation of the dispenser between either of the open and closed position. The detectable element may exemplarily be on the outlet 110, on the spool of a valve, or on the handle 108. The controller 202 receives these sensor signals and analyzes the sensor signals, for example by executing computer-readable code stored on a computer-readable medium and accessible by the controller, and upon execution of the computer-readable code, the controller processes the signals to determine when each sensor signal reflects a transition between dispenser condition states. Execution of the computer readable code further enables the controller to interpret the results of this analysis to relate the determined signal state to a dispense condition of the dispenser. In another example, a sensor of a load cell may produce a signal representative of a change in weight of the dispenser 100 or a system in which the dispenser 100 is a part. Measurement of such a change in weight may be indicative of a dispense, or provide additional information or context to a detected dispense as described above.

The system 200 is able to use this information in a variety of ways. First, the controller can operate to present an estimated dispense summary on one or more graphical displays 204 of the system. In a first example, one or more graphical displays are centrally located to a plurality of dispensers 100. In a second example, a graphical display is associated by proximity, and in an example, physical connection, to a single dispenser of the plurality. That is, each dispenser 100 is associated to its own graphical display 204. Power and communicative connections to the graphical displays 204 may be provided within the fixture. There are two general kinds of gravity feed dispensers: fixed volume and continuous flow. In a fixed volume dispenser, a portion of the bulk material is separated from the hopper and dispensed with each actuation of the valve assembly 104. In a continuous flow dispenser actuation of the valve assembly 104 to the open condition opens a flow path from the hopper to the outlet, bulk material flows out of the outlet so long as the valve assembly 104 is held in the open condition. When the valve assembly 104 is returned to the closed condition, the flow path is occluded and the flow of bulk material is stopped.

The controller 202 may receive information regarding the dispenser and the bulk material associated with the dispenser in a variety of ways. During an installation set-up, the controller 202 may be provided with information regarding the type of dispenser actuation of the dispenser at each dispenser location on the fixture as will be described in further detail herein. Upon refill or replacement of a hopper of bulk material, the user may input, either through an entry into a user interface connected to the controller 202 or, for example, by scanning a bar code on the hopper or a package of bulk material from which the hopper is refilled. The bar code may include an SKU or PLC or other identification of the bulk material. Such identification may be used to reference a product lookup table with the bulk material information, including but not limited to hopper volume, bulk material identification, bulk material density, estimated total number of dispense cycles before depletion of the hopper, or bulk material unit price.

In another example, the dispenser 100, or a portion of the dispenser (in an example of a detachable hopper), is self-identifying with a detectable element 88, for example by an RFID tag 130 (or other NFC communication device) that is readable by an associated sensor 86 in the fixture, for example an RFID reader. The reader, for example, may be located in the fixture and positioned to read the RFID tag 130 when the dispenser and/or hopper is connected to the fixture. In an example described in further detail herein, the detectable element 88 of the RFID tag is located in the handle 124 of the hopper 102. The corresponding sensor 86 for the RFID tag is thus located in the fixture relative to a final position of the handle 124 when the dispenser is secured to the fixture. Reading of the RFID tag by the reader identifies that the dispenser and/or hopper has been replaced and such RFID tag may encode additional information as noted above regarding the bulk material contents of the dispenser and/or hopper. In another example, the dispenser and/or hopper includes an identifying physical feature, for example an array or series of electrical pins or contacts which encode an identification of the dispenser and/or hopper. This identifying physical feature is read by connection of the dispenser and/or hopper to the fixture and communicated to the controller 202. The controller can use the identification of the hopper to reference a managed database which includes the information as noted above regarding the bulk material contents of the hopper and/or the hopper itself.

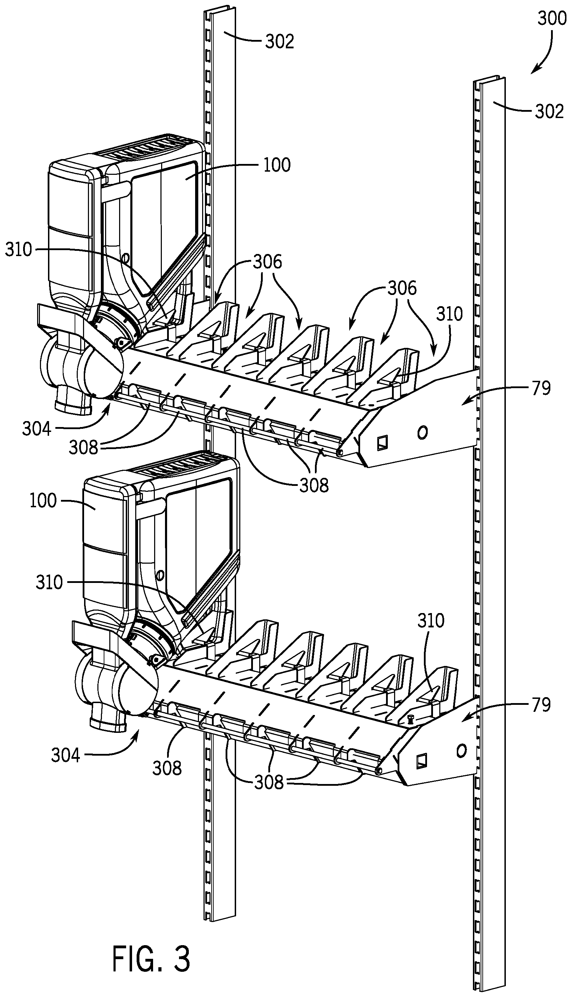

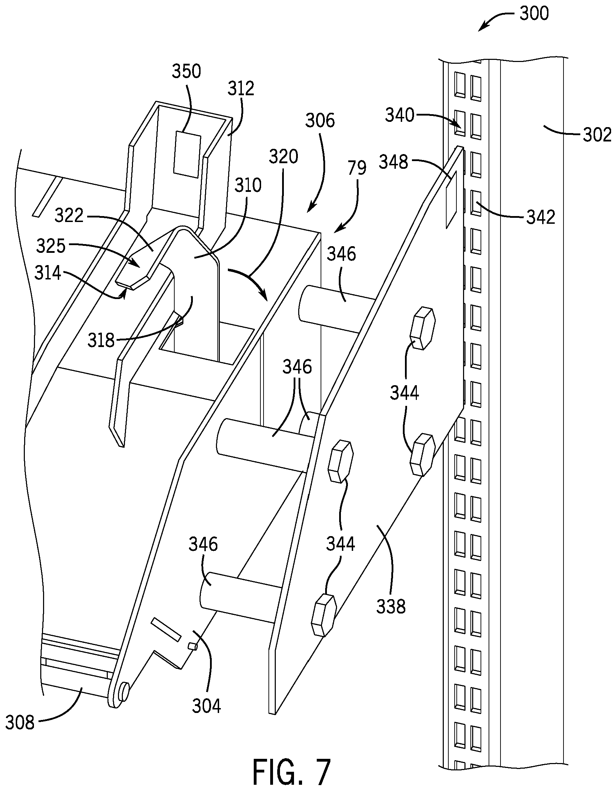

Figure 3 is a perspective view of an example of a fixture 300. Figure 4 is a detailed partial side view of the fixture 300. Figs. 3 and 4 depict the dispensers 100 in an operational position on the shelves 79 of the fixture 300. The operative position holds the dispenser 100 ready for user activation to dispense bulk products. The fixture 300 defines at least one shelf 79, and as depicted, two shelves, vertically spaced from one another within the fixture 300. The shelf 79 is mounted between support columns 302. The shelf 79 includes a mounting bar 304. The mounting bar 304 defines a plurality of bays 306, each bay 306 configured to receive a dispenser 100 of the types described above. The mounting bar 304 further includes a rail 308 at a forward point of each of the bays 306. As will be described in further detail herein, the rail 308 pivotably receives a dispenser 100. A latch 310 releasably secures the dispenser to the shelf 79 within a bay 306. Figure 7 provides a close-up view of a bay 306.

As noted above, the hopper 102 of the dispenser 100 includes a carrying handle 124. As will be described in further detail herein, the latch 310 of the bay 306 releasably secures about the handle to retain the dispenser 100 in the operational position. As will also be explained in further detail herein, the shelf 79may include an actuation detector 305. The actuation detector 305 may exemplarily sense the movement of a detectable element (for example ferrous and/or magnetic) embedded within a movable portion of the dispenser 100, including, but not limited to the handle 108 or a component of the valve 104. the handle 108. The actuation detector 305 communicates this to the controller 202 as an example of the sensor 86 described above with respect to Fig. 2.

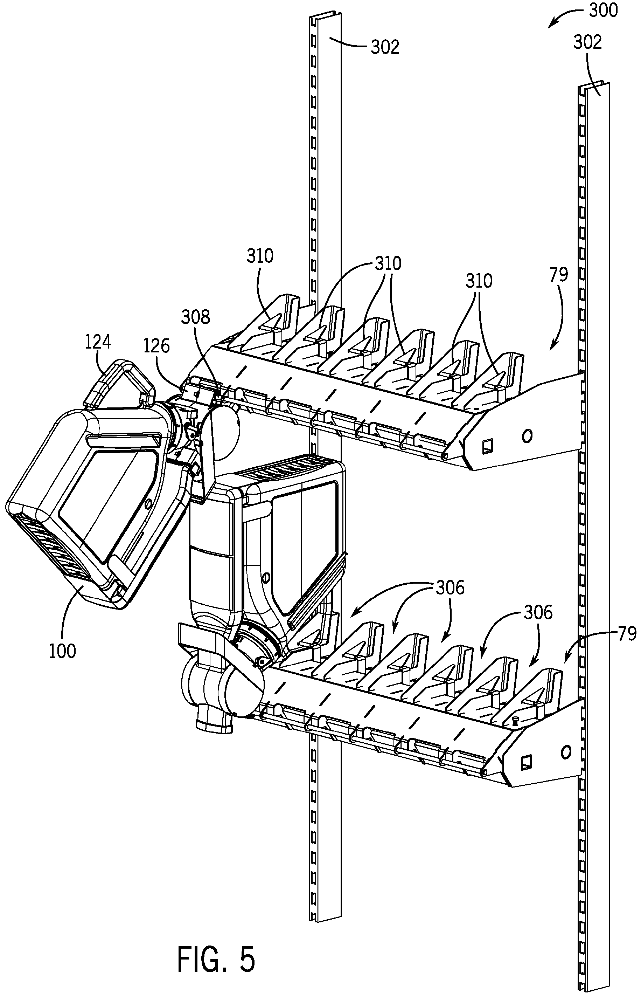

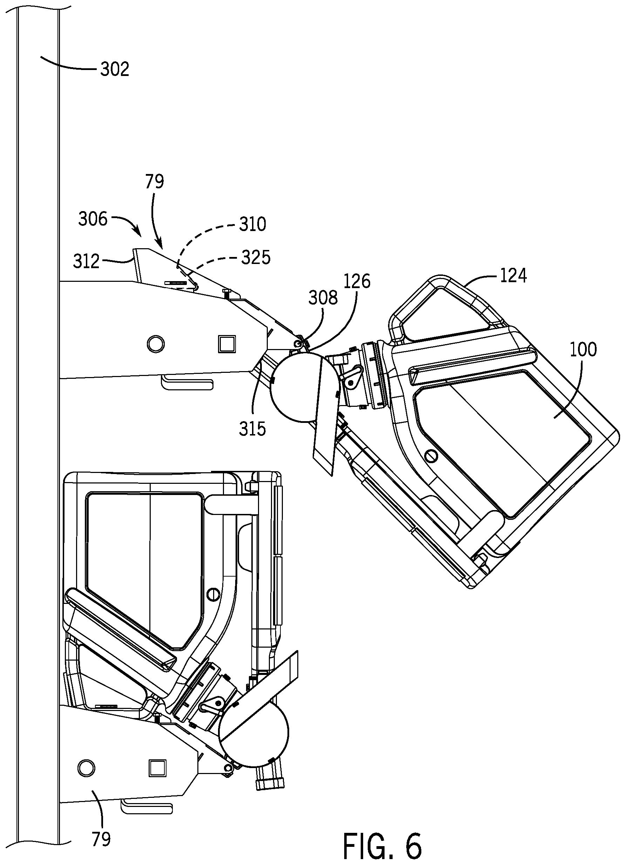

Figures 5 and 6 present views of the fixture 300 with a dispenser 100 rotated into the loading position. The dispenser exemplarily rotates greater than 90 degrees about the rail 308. The mounting bar 304 includes a front surface 315 which is angled and may include a foam or padded backstop to engage the end of the outlet 110 to define a stop position for the rotation of the dispenser 100. This positions the dispenser for disengagement from the rail 308, or for separation of the hopper 102 from the valve assembly 104. In an example, the handle 124 is oriented in an upward position or otherwise presented to the user when the dispenser 100 has been rotated into the loading position. This further accommodates loading and replacement of the hopper 102 and or dispenser 100.

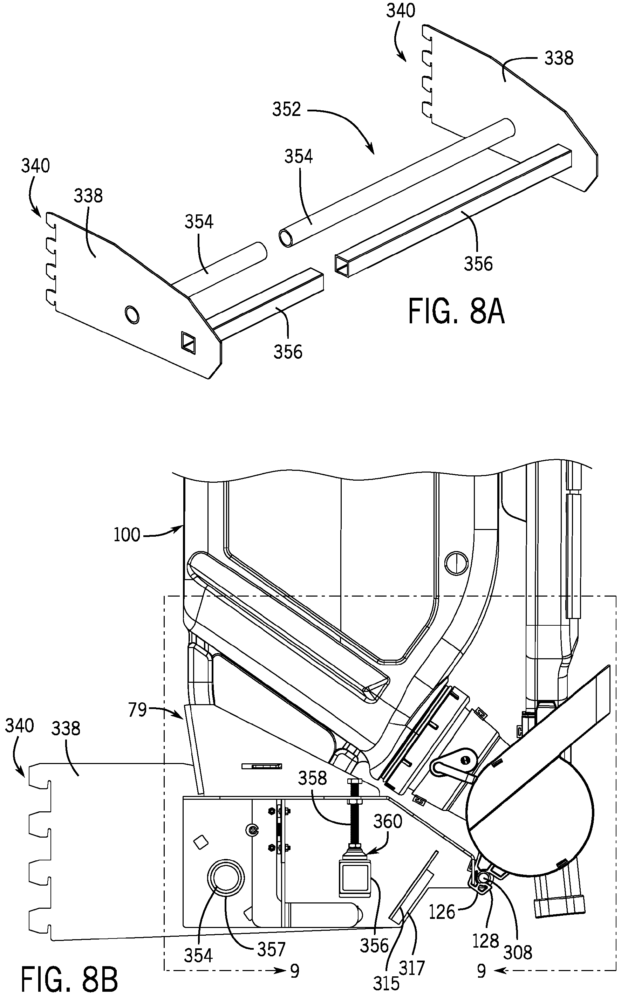

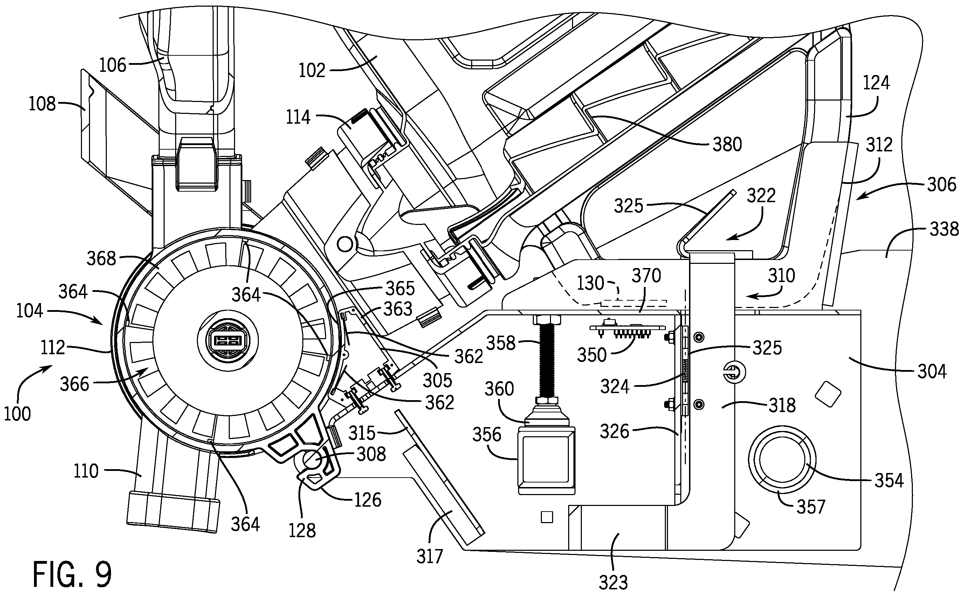

As best seen in Figs. 8 or 9, the clip 126 may include integrated fingers 128 that define a gap therebetween within which the rail 308 must rest to be completely retained within the clip 126. This may create a positive feedback or snapping or seating effect for a user to know that the dispenser 100 has been secured to the rail 308. An exposed portion of the rail 308 associated with each bay 306 may be dimensioned within a narrow width tolerance such that space is available for ease of seating the clip 126 while connecting the clip but also ensuring alignment between the handle 124 of the hopper 102 and the guide track 312 of the bay 306. The user then pivots the dispenser 100 about the rail 308 to position the dispenser 100 in the operational position within the bay 306.

Figure 7 depicts a detailed view of an example of the bay 306. When the dispenser 100 is retained within the bay 306, the handle 124 fits within a guide track 312 proximate to the latch 310. The latch 310 exemplarily pivots within a plane generally perpendicular to the guide track 312 such that a retaining surface 314 of the latch 310 is selectively positioned over the handle 124 in the vertical dimension. In a further example, the latch mechanism pivots within a plane generally parallel to the guide track 312. As indicated by arrow 316, the retaining surface 314 is vertically spaced above the handle 124. In examples, this provides a further operational advantage, as the latch 310 selectively retains the dispenser 100 within the bay 306, but the retaining surface 314 may be spaced vertically apart from the handle 124 so as to leave a degree of rotational freedom for the dispenser 100 to partially pivot about the rail 308. In an example, this provides for between 0° - 5°, 0° - 10°, 0°-15°, 0°-20° of rotation, while such ranges are merely exemplary and are not limiting on ranges contemplated within the scope of the present disclosure. This range of movement facilitates agitation that a retail manager may have staff employ to correct or prevent minor clogs or bridging of the bulk material within the dispensers.

The latch 310 further includes a projection 322, which may exemplarily form a portion of the retaining surface 314. The projection 322 provides a location for a physical interaction with the handle 124 of the hopper 102 to move the latch 310, e.g. in the direction of arrow 320, for example by pivoting an arm 318 of the latch 310 about a pivot point (shown in Fig. 9) between retaining or closed position and a release or open position. The latch 310 may be spring biased into the closed position with the retaining surface in position vertically over the handle 124. The projection 322 exemplarily includes an angled surface 325 which may be contacted by the handle 124 as the dispenser is rotated into the operational position, the handle 124 engaging the surface 325 to push the latch 310 out of the way in the direction of arrow 320 until the handle 124 is past the projection 322, after which the bias on the latch 310 returns the latch 310 to the closed position. As best seen in Fig. 9, a release lever 323 is connected to the arm 318 and positioned below the shelf 79. To move the latch 310 to the open position, manual engagement of the release lever 323 of the latch310 overcomes the spring bias to move the latch 310 in the direction of arrow 320 to the open position. With the latch 310 in the release position, the dispenser 100 is free to rotate about the rail 308 back to the loading position, exemplarily shown in Figures 5 and 6.

Figure 7 further depicts an example of a fixture 300 with a gondola hook adapter 336. The shelf 79 is configured to be flexibly adapted to a variety of common shelf support columns 302. The adapter 335 includes a bracket 338 with one or more hooks 340 configured to be received within aperture(s) 342 of the support column 302. Bar 304 is secured to the adapter 336 by a series of bolts 344 and spacers 346 to achieve an exact horizontal spacing either between existing shelving columns 302 or in a custom-fit spacing between installed columns 302. In a still further example, the adapter 336 includes one or more load cells 348 connected to the one or more hooks 340. These load cells 348 are a further example of the sensors 86 as described above with respect to Fig. 2 and may produce a measurement of the weight of the shelf system between the columns (or a known portion of the weight of the shelf). Such weight measurement may be used as described above with respect to Fig. 2, when communicated to the controller 202, which in turn may operate to calculate or to confirm other estimates of inventory and dispense operations as previously described.

Figures 8A and 8B depict a further example of a support system 352 for a shelf 79 as used in the fixture 300 and configured to be flexibly adapted to a variety of common configurations of shelf support columns (e.g. 302, Fig. 7). The shelf support system 352 includes two opposed brackets 338, each bracket 338 being configured with a plurality of hooks 340 to engage with a corresponding column. It will be recognized that a variety of brackets 338 may be cost-effectively constructed to correspond to any of a variety of common column sizing, spacing, and configurations. As described herein, a round support bar 354 and a rectangular support bar 356 extend inwardly from each bracket 338. Lengths of the support bars 354, 356 may be different for each bracket and may exemplarily be configured to accommodate different spacing and dimensions of shelves 79.

Fig. 8B is a side view of a shelf 79 with a dispenser 100 connected to a support system 352. The round support bar 354 is received in a corresponding tube 357 within the shelf 79, the tube 357 within the shelf 79 being dimensioned with an inside diameter to slidingly and rotatably receive the round support bars 354 therein. The shelf 79 is thus rotatable/pivotable about the round support bars 354. A jack screw 358 exemplarily at either end of the shelf 79 extends to a foot that engages the rectangular support bar 356. Threaded adjustment of the jack screw 358 finely adjusts any pivot angle of the shelf 79 about the round support bar 354 for leveling of the shelf 79 to accommodate any variance is the floor, walls, or column installation. In a still further example, a load cell 360 may be positioned between the foot of the jack screw 358 and the rectangular support bar 356, for measurement of the weight of the shelf and dispenser system. The load cell 360 may be an example of the sensor 86 as described above with respect to Fig. 2. This configuration of a load cell 360 may be used to measure the weight (or a known proportion of the weight) of dispensed product by noting a reduction in the measured weight after a dispense operation from one of the dispensers has occurred. In a still further example, the round support bar may be replaced or supplemented with a bearing or other component to reduce friction in the pivoting or rotating of the shelf. The reduction of friction in the movement of the shelf may improve weighing as described above and/or accuracy of any obtained weight measurements.

Figure 9 is a detailed cross-sectional view of the opposite side of the region marked 9-9 in Fig. 8B depicting a portion of the shelf 79 and dispenser 100. It will be recognized that like components from previous description are labeled with like reference numerals and that features as shown and described in Fig. 9 may be used with or incorporated to features as described elsewhere herein while remaining within the scope of the present disclosure.

The dispenser 100 includes the valve 104, which is a rotary valve including a spool 366 which rotates within a valve housing 112. The actuation detector 305 is an example of the sensor 86 from Fig. 2, and exemplarily includes one or more hall effect sensors 362. The spool 366 includes one or more elements 364 which are examples of the detectable elements 88 as described above with respect to Fig. 2, and exemplarily are ferro-magnetic beads or bars. The elements 364 move with the rotational movement of the spool 366 and may be located in a ratchet plate 368 or in vanes of the spool 366. The elements 364 are located at an outer edge of the spool 366 proximate an interior surface of the valve housing 112. The actuation detector 305 includes a sensor housing 363 with an engagement surface 365 which is shaped and dimensioned to fit in contact with the valve housing 112. This places the one or more hall effect sensors 362 within a proximity (e.g. 1 centimeter or less) of the rotation path of the elements 364. The at least one hall effect sensor 362 operates to produce a signal indicative of passing of an element 364 as the spool rotates, the controller (Fig. 2) is operable to receive such signal and make a determination of dispenser actuation. As previously noted, the actuation detector 305 is mounted to the fixture 300, and exemplarily to the bar 304 of the shelf 79, thus power and communication functions for the actuation detection are housed and located at the fixture, while the dispenser 100 and more specifically, the valve 104 does not include any electronic or powered components.

The fixture 300 further includes an RFID detector 350. The RFID detector 350 is another example of the sensor 86 shown and described above with respect to Fig. 2. It will be recognized that the position of the RFID detector 350 may be to any location immediately under or adjacent to the handle 124 or other portion of the dispenser 100 in contact or close vicinity to the shelf 79, such that the RFID detector 350 can read an RFID tag 130 incorporated into the dispenser 100 or the hopper 102 of the dispenser. It will be recognized that the RFID tag 130 is an example of the detectable element 88 as shown and described above with respect to Fig. 2. As shown in Fig. 9, the RFID tag is incorporated into the handle 124 of the hopper 102. As described above, the RFID detector 350 reads identifying information from the RFID tag 130 in the handle of the hopper and communicates this information to a controller 202, for example as shown with respect to Fig. 2. It will be recognized that other communication protocols including NFC, ZigBee and others may also be used in examples in addition to or instead of RFID.

As described above, the RFID detector 350 is located at a position wherein a corresponding RFID tag 130, exemplarily incorporated into the handle 124 of the dispenser 100 or hopper 102. In examples, the metal or other material of the fixture 300 may be removed in an aperture or a window 370 of RF transmissive material provided between the RFID detector 350 and the handle 124 to facilitate reading of the RFID tag 130 by the RFID detector 350 when the dispenser 100 is in the operative position.

Fig. 9 further depicts an example of the latch 310, the arm 318 of the latch 310 extends through the shelf 79 and is pivotably secured by a spring hinge 324 to a shelf brace 326 and pivots about an axis 325 defined thereby. The spring hinge 324 biases the latch 310 into the closed position with the projection 322 positioned over the handle 124 of the hopper 102 to retain the hopper in the bay 306. The release lever 323 extends from the arm 318 below the shelf 79. A user applies manual force to the release lever 323 to pivot the latch 310 about the axis 325 to overcome the bias from the spring hinge 324 to move the latch 310 into the open position for removal of the hopper 102.

As the dispenser rotates forward about the rail 308, the front surface 315 of the shelf provides a stop for the outlet 110 defining the bottom of the rotation range. In the example depicted, a pad 317 of polymer, rubber, or other resilient material faces the front surface 315 to engage the outlet 110 and provide protection against impact damage from the outlet 110 hitting the front surface 315.

Fig. 9 further depicts an example of an agitator 380 which is a component of the valve 104 and is insertable into the hopper 102. The agitator 380 is mechanically connected to the handle 108 and reciprocates within the hopper 102 with actuation by the handle 108. The agitator 380 functions to break up any bridging of bulk material within the hopper 102 and to draw the bulk material to the valve 104. Also depicted in Fig. 9 is the exemplary threaded, ribbed, or otherwise friction-fit of the barrel 114 to a mating opening of the hopper 102.

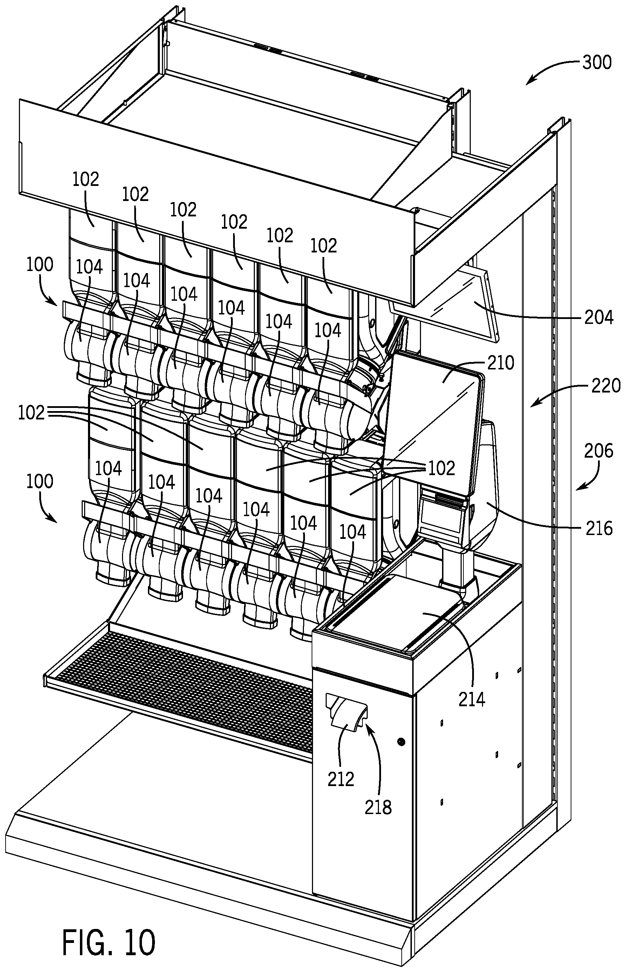

Fig. 10 depicts a perspective view of an example of the fixture 300 in the system 200 as described with respect to Fig. 2, in an example where weighing and labeling functionality and systems are incorporated into or in association with the fixture 300. It will be recognized that some or all of the features as shown herein may be used separately or in other various combinations while remaining within the scope of the present disclosure. As noted above, with detection of dispense actuations and the encoded information of the bulk product dispensed, the system may produce an estimate of the dispensed amount and the total cost. However, dependent upon the exact retail setting, the estimated amount and estimated price may not be sufficient to comply with retail pricing rules or regulations. The fixture 300 depicted in Fig. 10 also accommodates the weighing and labeling station 206, which in still further examples, may further provide a retail endpoint 220 with the incorporation of a payment acceptance device 216 for taking credit card or other manners of payment. The weighing and labeling station 206 receives the information obtained from the RFID tags in the handles of the respective hoppers in the fixture 300. In an example, the controller 202 (Fig. 2) uses the received information of dispense actuation detections and bulk material identification to present a list of recent dispenses on a graphical display 204. The example shown in Fig. 10 presents a common graphical display 204 for all of the dispensers 100 in the fixture 300, while it will be recognized in other examples that a graphical display may be associated with each dispenser. The presentation of dispense information on the graphical display 204 facilitates weighing, labeling, and/or payment for the dispensed bulk item by providing the customer with a prompt of their recent dispense. In an example the graphical display 204 may be operated to present an identification of the bulk material dispensed, an estimated volume, and/or an estimated price.

The weighing and labeling station 206 includes a scale 214, and a labeling device 218. The scale 214 may operate to provide a marketable measure of the bulk material so that an official sale price can be determined. The labeling device 218 operates to provide a sale indicator which enables furtherance of the checkout or payment process. The weighing and labeling station 206 includes a touch-sensitive graphical display 210 as a user interface that may further visually present a list of the dispensers and associated bulk materials that have been recently dispensed therefrom. The customer can select their bulk material from the list and the labeling device 218 produces the sale indicator to tie the identified bulk material to the receptacle in which the bulk material was dispensed. The labeling device 218 may be a label printer operable to print an identification label 212 which may include an SKU, PLN, bar code, or QR code identifying the bulk material. This coordination between the dispensers 100 and the labeling device 218 label printer through the controller 202 can help customers properly identify the bulk materials dispensed and thwart customer substitution of a label for a lower cost, but similar-looking, bulk material.

Citations to a number of references are made herein. The cited references are incorporated by reference herein in their entireties. In the event that there is an inconsistency between a definition of a term in the specification as compared to a definition of the term in a cited reference, the term should be interpreted based on the definition in the specification.

In the above description, certain terms have been used for brevity, clarity, and understanding. No unnecessary limitations are to be inferred therefrom beyond the requirement of the prior art because such terms are used for descriptive purposes and are intended to be broadly construed. The different systems and method steps described herein may be used alone or in combination with other systems and methods. It is to be expected that various equivalents, alternatives, and modifications are possible within the scope of the appended claims.

This written description uses examples to disclose the invention, including the best mode, and also to enable any person skilled in the art to make and use the invention. The patentable scope of the invention is defined by the claims and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A fixture (300) for a gravity-feed dispenser, the fixture comprising:
a shelf (79) configured to support the dispenser;
a rail (308) at a front of the shelf, wherein the dispenser is configured for pivotable engagement with the rail; and
a latch (310) configured to releasably retain the dispenser in an operative position on the shelf.

2. The fixture of claim 1, wherein the shelf further comprises:
a mounting bar (304); and
a plurality of bays (306) defined across the mounting bar, each bay of the plurality of bays comprising a guide track (312);
wherein the rail is positioned at a front edge of the mounting bar relative to each bay of the plurality of bays; and
wherein the latch is configured to pivot relative to the shelf between an open position and a closed position and biased in the closed position, the latch comprising a projection configured to extend across the guide track when in the closed position.

3. The fixture of claim 1 or 2, further comprising:
a controller (200) configured to receive a signal from the actuation detector and configured to detect a dispense from the signal;
an ID reader (86, 355) positioned relative to the guide track and configured to read a hopper identifier located in a handle of a hopper, wherein the hopper identifier encodes an identification of a bulk material in the hopper;
a scale (214); and
a graphical display (204, 210) in proximity to the scale wherein when a dispense is detected by the controller, the controller is configured to present the identification of the bulk material on the graphical display.

4. A gravity-feed dispensing system comprising:
a gravity-feed dispenser (100) comprising:
a hopper (102) configured to hold a bulk material for dispense; and
a valve (104) configured to selectively connect to the hopper, the valve operable between open and closed conditions to selectively permit bulk material to pass from the hopper through the valve; and
a fixture of any of the claims 1 to 3.

5. The gravity-feed dispensing system of claim 4, wherein the valve comprises a clip (126) configured for releasable engagement about the rail of the fixture and the dispenser is configured to pivot on the clip about the rail between the operative position and a loading position.

6. The gravity-feed dispensing system of claims 4 or 5 when dependent on claim 2, wherein the guide track configured to receive a handle of the hopper therein when the dispenser is in the operative position.

7. The gravity-feed dispensing system of any of claims 4-6, wherein the dispenser is configured to pivot relative to the shelf between an open position and a closed position and is biased in the closed position, and wherein the latch includes a projection (322) configured to extend across the handle when the latch is in the closed position; wherein one of: the projection is vertically spaced from the handle by a predetermined distance when the latch is in the closed position, wherein the predetermined distance provides for a predetermined range of rotation of the dispenser about the rail while the latch is in the closed position; and
the latch comprises a release lever (323) extending below the shelf from the projection of the latch, wherein a force on the release lever overcomes the bias to move the projection from the closed position to the open position.

8. The gravity-feed dispensing system of any of claims 4-7, wherein the fixture comprises an actuation detector (305).

9. The gravity-feed dispensing system of any of claims 4-8, wherein the actuation detector comprises a Hall effect sensor (362) and the valve comprises at least one detection element (364) configured to move past the Hall effect sensor upon actuation of the valve; wherein optionally, the detection element is ferromagnetic.

10. The gravity-feed dispensing system of any of claims 4-9, wherein the hopper comprises a hopper identifier (130), the hopper identifier encoding an identification of the bulk material in the hopper, and the shelf comprises an ID reader (350) configured to read the hopper identifier when the hopper is in proximity to the ID reader in the operative position.

11. The gravity-feed dispensing system of claim 10, wherein the ID reader is an RFID reader (350) and the hopper identifier is an RFID tag (130).

12. The gravity-feed dispensing system of any of claims 4-11, wherein the fixture comprises at least a first shelf support bar (354, 356) and a second shelf support bar (354, 356), wherein the shelf is supported from the first and second shelf support bars.

13. The gravity-feed dispensing system of claim 12, wherein the first shelf support bar is cylindrical (354), and the shelf comprises a tube (357) configured to receive the first shelf support bar for sliding and pivoting engagement between the shelf and the first shelf support bar.

14. The gravity-feed dispensing system of claim 13, wherein the shelf comprises a screw (358) configured for engagement with the second shelf support bar (356), and the screw is threadingly adjustable to adjust an angle of the shelf about the first shelf support bar.

15. The gravity-feed dispensing system of claim 13, further comprising a load cell (360) disposed between the shelf and the second shelf support bar, wherein the load cell is configured to measure a weight representative of a combined weight of the shelf and the dispenser, optionally at least one bearing is positioned between the shelf and the first shelf support bar to facilitate rotation of the shelf about the first support bar.
